(19) Europäisches Patentamt
European Patent Office
Office européen des brevets

(11) Veröffentlichungsnummer: **0 065 688**
**B1**

(12) # EUROPÄISCHE PATENTSCHRIFT

(45) Veröffentlichungstag der Patentschrift: **10.04.85**

(21) Anmeldenummer: **82104034.2**

(22) Anmeldetag: **10.05.82**

(51) Int. Cl.[4]: **C 08 G 18/12**, C 08 G 18/44, C 08 G 18/75, C 08 G 18/73, C 09 D 3/72, C 08 G 18/38, D 06 N 3/14

(54) **Verfahren zur Herstellung von lösungsmittelarmen, hitzehärtbaren Polyurethan-Reaktivbeschichtungsmassen und ihre Verwendung in Direkt- und Umkehr-Beschichtungsverfahren.**

(30) Priorität: **23.05.81 DE 3120596**

(43) Veröffentlichungstag der Anmeldung: **01.12.82 Patentblatt 82/48**

(45) Bekanntmachung des Hinweises auf die Patenterteilung: **10.04.85 Patentblatt 85/15**

(84) Benannte Vertragsstaaten: **BE CH DE FR GB IT LI NL SE**

(56) Entgegenhaltungen:
**EP - A - 0 013 890**
**FR - A - 2 006 788**
**FR - A - 2 204 735**

(73) Patentinhaber: **BAYER AG, Konzernverwaltung RP Patentabteilung, D-5090 Leverkusen 1 Bayerwerk (DE)**

(72) Erfinder: **König, Eberhard, Dr., Gelber Weg 22, D-6242 Kronberg 2 (DE)**
Erfinder: **Thoma, Wilhelm, Dr., Birkenweg 25, D-5090 Leverkusen 31 (DE)**
Erfinder: **Pedain, Josef, Dr., Haferkamp 6, D-5000 Köln 80 (DE)**
Erfinder: **König, Klaus, Dr., Heymannstrasse 50, D-5090 Leverkusen 1 (DE)**

**EP 0 065 688 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft hitzehärtbare, lösungsmittelarme Polyurethan-Reaktivbeschichtungsmassen, ein Verfahren zu ihrer Herstellung und ihre Verwendung zur Direkt-, Umkehr- und Matrizenumkehrbeschichtung unter Ausbildung von licht-, oxidations-, vergilbungs- und hydrolysebeständigen Polyurethanharnstoffen als Beschichtungspolymer.

Die Beschichtung von textilen Flächengebilden mit lichtbeständigen Einkomponenten-Polyurethanharnstofflösungen, deren Gehalt an Lösungsmittel bis zu 80 Gew.-% beträgt, gehört zum Stand der Technik. Bei derartigen Beschichtungsmassen, wie sie z.B. in der DE-OS 2 252 280 beschrieben sind, werden Hydroxylgruppen-haltige Polycarbonate mit aliphatischen Diisocyanaten und aliphatischen Diaminen zu hochmolekularen Polyurethanharnstoffen, für deren Herstellung und Applizierung man dann allerdings grosse Mengen an Lösungsmitteln benötigt, umgesetzt.

Hingegen sind lösungsmittelarme bzw. -freie Polyurethanharnstoff-Beschichtungsmassen, z.B. in der DE-OS 2 902 090, bekanntgeworden. Hier verzichtet man von vornherein auf den hochmolekularen Aufbau der Beschichtungsmassen und nimmt statt dessen ein geeignetes Reaktivsystem, das aber quasi wie ein Einkomponentensystem der zuerst genannten Art auf üblichen Beschichtungsanlagen verarbeitbar ist. Die Reaktivkomponenten stellen einerseits NCO-Präpolymere, die aus aromatischen Diisocyanaten und sowohl Hydroxypolyethern als auch Hydroxypolyestern hergestellt werden und deren NCO-Endgruppen mit einem Ketoxim blockiert sind, andererseits Polyamine dar.

Als Folge des Gehalts an aromatischen Diisocyanaten einerseits, an Polyethern andererseits weisen diese Beschichtungen keine gute Lichtechtheit auf. Bekanntlich führt die Anfälligkeit gegenüber oxidativen Angriffen bei den genannten Polymerbausteinen zu Vergilbung bzw. Abbau der Polymerketten und damit zum Verlust an Zugfestigkeit und an Dehnung.

Den gleichen Nachteil einer unzureichenden Lichtechtheit und Lichtbeständigkeit weisen auch die auf der analogen chemischen Grundlage beruhenden Beschichtungsmittel der DE-OS 2 814 079 auf. Da diese Beschichtungsmittel aber in erster Linie für den Haftstrich eingesetzt werden — der mitverwendete Dispersionszusatz wirkt thixotropierend und verhindert ein zu tiefes Eindringen der Beschichtung ins Gewebe — ist eine gute Lichtbeständigkeit in diesem Falle auch nicht zwingend erforderlich.

Es war nun Aufgabe der Erfindung, ein lösungsmittelarmes Polyurethanharnstoff-Reaktivbeschichtungssystem, bei dem sowohl die Isocyanat- und die höhermolekulare Polyhydroxylverbindung als auch die aminischen Vernetzerkomponenten so ausgewählt werden, dass ein Polymer erhalten wird, das lichtecht, lichtbeständig, darüber hinaus auch gegen Oxidation beständig und gegen Hydrolyse resistent ist, entsteht. Dieses System soll in einfacher Weise — quasi als Einkomponentensystem — auf üblichen Beschichtungsanlagen, wie sie z.B. für PVC-Beschichtung benützt werden, zu Deckstrichen mit trockenem Griff und mit hohem, bisher nicht bekanntem Eigenschaftsniveau verarbeitet werden, wobei die eingangs geschilderten Nachteile des Standes der Technik vermieden sind.

Diese Aufgabe konnte mit den nachstehend näher beschriebenen Beschichtungsmassen gelöst werden, wobei ein spezielles, flüssiges Caprolacton-hexandiol-1,6-polycarbonat, (cyclo)aliphatische Diisocyanate und ein besonders stabilisierend wirkendes «Bis-Carbazinester-polyol» in erfindungscharakterisierender Weise verwendet wird.

Gegenstand der Erfindung ist somit ein Verfahren zur Herstellung von lösungsmittelarmen, hitzehärtbaren Polyurethan-Reaktivbeschichtungsmassen auf Basis von einem Ketoxim-blockierten NCO-Präpolymeren aus höhermolekularen Polyolen, gegebenenfalls niedermolekularen Kettenverlängerungsmitteln und überschüssigen Polyisocyanaten und einem Polyaminvernetzer, sowie gegebenenfalls Lösungsmitteln, die sich zu lichtechten und licht-, oxidations-, thermo- und hydrolysebeständigen Polyurethanharnstoffen härten lassen, dadurch gekennzeichnet, dass man die Komponenten in folgenden Molverhältnissen einsetzt:

A) Ein mit Ketoximen, vorzugsweise mit Butanonoxim blockiertes NCO-Präpolymer aus

1. 1 Mol von 2- bis 4funktionellen, bevorzugt 2- bis 3funktionellen, höhermolekularen Polyhydroxylverbindungen mit einem Molekulargewicht zwischen 1000 und 4000, bevorzugt 1500 bis 2500, wobei
   a) 0,5 bis 1,0 Mol aus einem Polyester-Polycarbonat mit einem Molekulargewicht von 1000 bis 4000, bevorzugt 1500 bis 2500, hergestellt aus Diphenylcarbonat und Esterglykolen aus $\epsilon$-Caprolacton und 1,6-Hexandiol, und
   b) 0,5 bis 0 Mol aus 2- bis 4funktionellen, bevorzugt 2- bis 3funktionellen, besonders 2funktionellen, höhermolekularen Polyesterpolyolen, vorzugsweise Adipinsäure-Polyestern mit Polyolen mit 4 und mehr C-Atomen, und einem Molekulargewichtsbereich von 1000 bis 4000, vorzugsweise von 1500 bis 2500, bestehen,

2. 0,1 bis 1,2 Mol, vorzugsweise 0,2 bis 0,8 Mol an niedermolekularen Polyolen mit Molekulargewichten von 32 bis 300, vorzugsweise von Diolen, wobei
   c) 0,1 bis 0,8 Mol, vorzugsweise 0,2 bis 0,5 Mol Bis-carbazinester-polyole der allgemeinen Formel

$$HO\text{-}R\text{-}O\cdot\overset{\displaystyle O}{\overset{\|}{C}}\cdot NH\cdot NH\cdot\overset{\displaystyle O}{\overset{\|}{C}}\cdot O\text{-}R\text{-}OH \quad ,$$

   in der R einen geradkettigen und/oder verzweigten $C_1$-$C_5$-Alkylen-, oder hydroxylsubstituierten Alkylenrest, vorzugsweise einen Ethylen- und/oder 1,2-Propylenrest darstellt, und
   d) gegebenenfalls bis zu 1,1 Mol niedermolekulare Polyole, vorzugsweise tertiäre Aminogruppen enthaltende Di- und Triole, sind sowie

3. aliphatische und/oder cycloaliphatische Diisocyanate in einem NCO/OH-Verhältnis der Komponenten $\frac{3}{1+2}$ von 1,5:1 bis 6:1, bevorzugt 1,7:1 bis 2,5:1 und
4. dem NCO-Gehalt des Präpolymers äquivalenten Mengen an Ketoximen, bevorzugt Butanonoxim,

und als Vernetzer

B) aliphatische und/oder cycloaliphatische Polyamine mit mindestens 2 primären Aminogruppen, bevorzugt als wesentliche Komponente cycloaliphatische Diamine der allgemeinen Formel

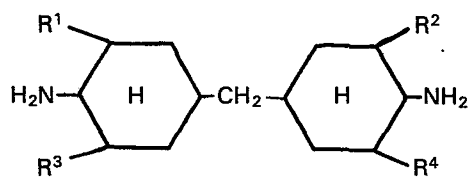

in welcher

$R^1$, $R^2$, $R^3$ und $R^4$ unabhängig voneinander für Wasserstoff, oder eine $C_1$-$C_3$-Alkylgruppe stehen, mit der Massgabe, dass das Diamin zu mindestens 75% aus dem cis, cis-Isomeren besteht, wenn $R^1$ bis $R^4$ alle Wasserstoff bedeuten,
in $NCO/NH_2$-Verhältnissen von A)/B) zwischen 1,2:1 und 0,8:1, bevorzugt 1,05:1 und 0,95:1 und besonders bevorzugt um 1:1, sowie

C) organische Lösungsmittel, so dass Reaktionslösungen mit bis zu 40, bevorzugt bis 30, besonders bevorzugt bis 20 Gew.-% Lösungsmittelgehalt erhalten werden.

Gegenstand der Erfindung ist auch ein Verfahren zur Herstellung der lösungsmittelarmen, hitzehärtbaren Reaktivbeschichtungsmassen in Form ihrer Mischung, dadurch gekennzeichnet, dass man die oben beschriebenen NCO-Präpolymeren A), die als Vernetzter wirkenden Polyamine B) zusammen mit den Lösungsmitteln, welche auf A) und B) verteilt sein können, bei niedrigen Temperaturen (z.B. 0 bis 60°C) vermischt.

Gegenstand der Erfindung ist ferner die Verwendung dieser Reaktivbeschichtungsmassen in einem Direkt-, Umkehr- und/oder Matrizenumkehrverfahren zur Beschichtung von Substraten. Die erfindungsgemässen Beschichtungsmassen können dabei als Deck- oder als Schaumbeschichtung nach üblichen Verfahren der Direkt- und/oder Umkehrbeschichtung Verwendung finden. Sie sind auch geeignet, von speziell hergestellten Siliconmatrizen, z.B. nach den US-Patentschriften 3 369 949, 3 655 497 und 4 124 428, sowie der deutschen Patentschrift 1 933 255, veloursartige Deckschichten zu bilden. Hierzu bringt man beispielsweise die Reaktivbeschichtungsmasse auf die Matrize, verfestigt die Beschichtung durch Erhitzen und zieht die verfestigte Beschichtung von der Matrize ab und kaschiert gegebenenfalls auf textiles oder Lederträgermaterial. Bevorzugt erwärmt man dazu die Beschichtungsmasse zunächst auf eine Temperatur zwischen etwa 30 und 80°C, wobei die Beschichtungspaste ein Viskositätsminimum durchläuft (max. etwa 30 000 mPas), die Matrize hervorragend abformt und danach durch Erwärmen auf eine Temperatur oberhalb von 90°C, besonders zwischen 140 und 180°C in kurzer Einwirkungszeit aushärtet.

Als höhermolekulare Polyhydroxylverbindungen [A)/1.a)] werden erfindungsgemäss bei Raumtemperatur flüssige, relativ hydrophobe Hydroxylgruppenhaltige Polyester-Polycarbonate verwendet, wobei die Esterbausteine jeweils 6 C-Atome enthalten. Sie werden durch Umsetzung von $\epsilon$-Caprolacton mit Hexandiol-1,6 im Molverhältnis von etwa 1:1 und anschliessende Überführung dieses Esterglykols mit Diphenylcarbonat in das entsprechende Polyester-Polycarbonatdiol mit Molekulargewichten zwischen 1000 bis 4000, vorzugsweise 1500 bis 2500, erhalten. Die Verfahrensweise der Herstellung der genannten Polyesterpolycarbonate ist in der DE-AS 1 770 245 beschrieben.

Weiterhin eignen sich Mischungen aus mindestens 50 Mol-% der genannten Polyestercarbonate [A)/1.a)] mit an sich bekannten Hydroxypolyestern [A)/1.b)] auf der Basis von z.B. Adipinsäure und Glykonen wie Ethylenglykol und Propylenglykol, vorzugsweise jedoch Estern mit Diolen mit 4 und/oder mehr Kohlenstoffatomen, z.B. Butandio-1,4, Hexandiol-1,6, Neopentylglykol und/oder $\beta$-Methyl-hexandiol-1,6. Die Ester können auch kleinere Mengen an mehrfunktionellen Verbindungen, z.B. Trimethylolpropan, eingebaut enthalten. Ihre Funktionalität liegt zwischen 2 und 4, vorzugsweise zwischen 2 und 3; Molekulargewichte um 2000 sind besonders bevorzugt. Besonders bevorzugt sind Mischungen aus den beschriebenen Polyesterpolycarbonaten vom mittleren Molekulargewicht 1500 bis 2500 mit Adipinsäurepolyestern aus Hexandiol-1,6 und Neopentylglykol vom mittleren Molekulargewicht 1500 bis 2500 in einem Molverhältnis von 60:40 bis 80:20.

Die erfindungsgemässen Ketoxim-blockierten NCO-Präpolymere A) enthalten weiterhin 0,1 bis 1,2 Mol, vorzugsweise 0,2 bis 0,8 Mol pro Mol höhermolekularer Polyhydroxylverbindungen A)/1., niedermolekulare Polyole A)/2., vorzugsweise Diole mit einem Molekulargewicht von weniger als 300.

Die zur Anwendung kommenden niedermolekularen Polyole bestehen erfindungsgemäss zumindest in Mengen von 0,1 bis 0,8 Mol, vorzugsweise 0,2 bis 0,5 Mol, aus Bis-carbazinester-polyolen [A)/2.c)] der allgemeinen Formel

$$HO\text{-}R\text{-}O\cdot\overset{\overset{O}{\|}}{C}\cdot NH\cdot NH\cdot\overset{\overset{O}{\|}}{C}\cdot O\text{-}R\text{-}OH \quad ,$$

in der

R einen geradkettigen und/oder verzweigten $C_1$ bis $C_5$-Alkylen-, oder Hydroxyl-substituierten Alkylenrest, vorzugsweise einen Ethylen- und/oder 1,2-Propylenrest, darstellt.

Diese «Biscarbazinester-polyole» stellen Umsetzungsprodukte von 1 Mol Hydrazin mit 2 Mol eines beliebigen cyclischen Alkylencarbonats mit 5- bis 6gliedrigen Ringen dar. Beispiele für die cyclischen Alkylencarbonate als Reaktivkomponenten sind Ethylenglykol- und Propylenglykolcarbonat (2-Oxo-1,3-dioxolan bzw. 2-Oxo-4-methyl-1,3-dioxolan), das Umsetzungsprodukt aus 1 Mol Glycerin mit 1 Mol Diphenylcarbonat (2-Oxo-4-hydroxymethyl-1,3-dioxolan sowie 1,3-Dioxanon-2-(Ring-Verbindungen), wie sie durch Umsetzung von z.B. 1,3-Propandiol oder Neopentylglykol mit Diphenylcarbonat gebildet werden. Bevorzugt werden Ethylenglykol- und Propylenglykolcarbonat als Reaktionspartner für das Hydrazin. Man erhält diese Biscarbazinester-polyole, vorzugsweise Biscarbazinesterdiole, indem man Hydrazinhydrat, gegebenenfalls in einem, die Umsetzung moderierenden Lösungsmittel wie Toluol oder Isopropanol gelöst vorlegt, die entsprechende Menge des cyclischen Alkylencarbonats hinzugibt, die Umsetzung bei ca. 100 °C vervollständigt und schliesslich das Hydratwasser, sowie gegebenenfalls vorhandenes Lösungsmittel destillativ entfernt. Die in Form von farblosen Ölen (vorzugsweise bei Propylencarbonatderivaten) oder als Feststoffe (vorzugsweise bei Umsetzung mit Ethylencarbonat) anfallenden Verbindungen können in diesem Zustand direkt für die erfindungsgemässen Umsetzungen eingesetzt werden. Bevorzugt sind die Umsetzungsprodukte des Hydrazins mit Propylencarbonat, welche zumindest überwiegend sekundäre OH-Gruppen besitzen. Der erfindungsgemässe Einbau der Biscarbazinesterpolyole ergibt einen überraschend hohen Effekt hinsichtlich einer Verbesserung von Lichtechtheiten, sowie Lichtbeständigkeiten (d.h. weniger Verfärbung bzw. weniger Abbau bei Belichtung), als auch eine sehr deutliche Verminderung der Thermovergilbung bei der Hitzehärtung der Mehrkomponentenreaktivbeschichtungsmassen entsprechend der Erfindung.

Neben den Biscarbazinesterpolyolen als niedermolekulare Polyhydroxylverbindungen können noch andere übliche Polyole [A)/2.d)] eingesetzt werden, z.B. Butandiol-1,4, Hexandiol-1,6, 2-Ethylhexandiol-1,3, Trimethylolpropan aber bevorzugt tertiäre aliphatische Aminogruppen enthaltende Di-, Tri- und/oder Polyole, z.B. N-Methyl-bis-(2-hydroxypropyl)-amin, N-Methyl-bis-(2-hydroxyethyl)-amin, N,N'-Bishydroxyethylpiperazin oder Triethanolamin.

Besonders bevorzugt sind hierbei Mischungen von Hydrazinpropylenglykolcarbonat-Umsetzungsprodukten [als Komponente A)/2.c)] und Triethanolalin [als Komponente A)/2.d)] im Molverhältnis 60:40 bis 80:20.

Die Mitverwendung der Tertiäramin-polyole ergibt einen weiteren, z.T. synergistisch verstärkend wirksamen lichtstabilisierenden Effekt, besonders aber eine gute Färbbarkeit bzw. Farbstoff-fixierende Wirkung.

Als aliphatische und/oder cycloaliphatische Polyisocyanate [A)/3.] sind solche geeignet, wie sie z.B. in den US-Patentschriften 3 984 607 und 4 035 213 beschrieben sind. Besonders genannt seien Hexamethylen-1,6-diisocyanat, 1-Isocyanato-3,3,5-trimethyl-5-isocyanato-methyl-cyclohexan und 4,4'- und/oder 2,4'-Diisoxcyanato-dicyclohexylmethan, sowie Di- oder Tetra-$C_1$-$C_4$-alkyl-derivate dieser Diisocyanate, sowie insbesondere Gemische dieser genannten Diisocyanate. Bevorzugt werden Hexandiisocyanat, Isophorondiisocyanat und 4,4'-Diisocyanato-dicyclohexylmethan. Es können auch höherfunktionelle Isocyanate eingesetzt werden, z.B. 1,6,11-Triisocyanato-undecan oder Biuretpolyisocyanate auf Basis Hexan-diisocyanat, doch sind diese weniger bevorzugt.

Als Blockierungsmittel [A)/4.] für die NCO-Vorpolymerisate kommen die üblichen Ketoxime, z.B. aus Hydroxylamin und Ketonen wie Aceton, Methylethylketon, Diethylketon, Cyclohexanon, Acetophenon oder Benzophenon in Frage. Bevorzugt sind Propanonoxim und besonders das Butanonoxim. Sie werden in etwa äquivalenten Mengen, bezogen auf NCO-Gruppen des Vorpolymerisats eingesetzt — es können aber auch unterschüssige oder schwach überschüssige Mengen an Blockierungsmitteln verwendet werden.

Als Vernetzerkomponente B) für die erfindungsgemässen NCO-Präpolymeren A) dienen aliphatische, sowie bevorzugt cycloaliphatische, Amine mit mindestens 2 primären Aminogruppen, wie sie ausführlich in der DE-OS 2 814 079 beschrieben sind. Bevorzugt sind aliphatische und cycloaliphatische Diamine $H_2N$-D-$NH_2$. Es sind dies z.B. 1,6-Hexan-, 1,10-Decan- oder 1,12-Dodecan-diamine, ferner 1,6,11-Undecan-triamin, bevorzugt jedoch cycloaliphatische Diamine wie 2,4'- und/oder 4,4'-Diaminodicyclohexyl-methane, sowie besonders cycloaliphatische Diamine der Formel

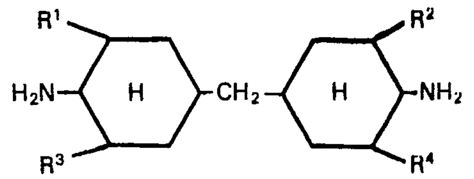

in welcher

$R^1$, $R^2$, $R^3$ und $R^4$ unabhängig voneinander für Wasserstoff, oder eine $C_1$-$C_3$-Alkylgruppe (Methyl-, Ethyl-, Propyl-, iso-Propylgruppe) stehen, mit der Massgabe, dass das Diamin zu mindestens 75% aus dem cis, cis-Isomeren besteht, wenn $R^1$ bis $R^4$ alle Wasserstoff bedeuten.

Erfindungsgemäss bevorzugt ist 4,4'-Diamino-3,3'-dimethyl-dicyclohexylmethan, ein bei Raumtemperatur flüssiges Diamin mit sehr geringem Dampfdruck und passender Reaktivität. Es wird vorzugsweise als überwiegendes Diamin (mehr als 50 Mol-% der Gesamtamine) verwendet.

Als Lösungsmittel C) werden Essigsäureethylester, Methylethylketon, Butylacetat, Xylol, N-Methylpyrrolidon, Dimethylformamid und/oder Dimethylacetamid verwendet. Infolge des blockierten Charakters der NCO-Gruppen müssen hierbei jedoch nicht notwendigerweise nur gegenüber NCO-Gruppen inerte Lösungsmittel eingesetzt werden. Beispielsweise können auch Isopropanol, Ethylenglykolmonomethyl- bzw. Ethylenglykolmonoethylether verwendet werden. Bevorzugt ist Ethylenglykolmonomethyletheracetat.

Die Menge der Lösungsmittel wird so gewählt, dass eine optimale Verarbeitungsviskosität der NCO-Vorpolymerisate [A)] bzw. der Gesamtmischung aus A), B) und C) erhalten wird. Diese beträgt ca. 20 000 bis 50 000 mPas bei 20 °C. Der Lösungsmittelgehalt der Endmischung der Reaktivbeschichtungsmassen

beträgt dabei maximal 40 Gew.-% (= 60 Gew.-% Feststoffgehalt), vorgezogen wird jedoch ein Gehalt von bis zu 30 Gew.-% Lösungsmittel, besonders bevorzugt wird ein noch lösungsmittelärmeres Gemisch mit bis zu 20 Gew.-% Lösungsmittel. Die Lösungsmittel werden dabei überwiegend zur Verflüssigung der NCO-Präpolymerisate verwendet.

Die Herstellung der erfindungsgemässen, blockierten NCO-Präpolymeren erfolgt in an sich bekannter Weise, indem man die gesamten höhermolekularen Polyhydroxylverbindungen [A)/1.a) + 1.b)] und niedermolekularen Polyhydroxylverbindungen [A)/2.c) + 2.d)] mit überschüssigem Polyisocyanat [A)/3.] und gegebenenfalls in Gegenwart eines gegenüber freien NCO-Gruppen inerten Lösungsmittels [C)], vorzugsweise bei 70 bis 120°C umsetzt, bis der berechnete NCO-Gehalt erreicht bzw. knapp unterschritten ist.

Anschliessend werden die restlichen NCO-Gruppen dieser NCO-Präpolymeren mit der stöchiometrischen Menge an Ketoxim [A)/4.] bei ca. 60 bis 90°C blockiert und durch Zugabe von gegebenenfalls weiteren Lösungsmitteln [C)] wird die Verarbeitungsviskosität eingestellt.

Eine gegebenenfalls mehrstufige Verfahrensvariante ist dann bevorzugt heranzuziehen, wenn man niedermolekulare Polyole [A)/2.d)] mit basischen Gruppen, wie z.B. Triethanolamin, einbaut. In diesem Falle setzt man die höhermolekularen Polyhydroxylverbindungskomponenten und das Bis-carbazinesteralkanol mit der Gesamtmenge an Diisocyanat bei etwa 100 bis 120°C bis zu dem entsprechenden NCO-Gehalt um, kühlt danach auf eine mittlere Temperatur, z.B. 65 bis 80°C, ab und setzt bei dieser Temperatur mit den tertiäraminhaltigen, niedermolekularen Polyolkomponenten bis zum berechneten End-NCO-Gehalt um. Die Blockierungsreaktion mit Ketoximen wird schliesslich wie angegeben durchgeführt. Bei der Herstellung der oben beschriebenen NCO-Präpolymeren wählt man im allgemeinen ein NCO/OH-Verhältnis von A) $\left(\frac{3}{1+2}\right)$ von 1,5:1 bis 6,0:1, vorzugsweise von 1,7:1 bis 2,5:1.

In den Ketoxim-blockierten NCO-Präpolymeren A) sind die höhermolekularen Polyhydroxylverbindungen [A)/1.] in Mengen von etwa 50 bis 70 Gew.-% vorhanden, die niedermolekularen Polyole [A)/2.] in etwa 1 bis 10 Gew.-%, vorzugsweise 3 bis 7 Gew.-%, der Rest wird durch die Polyisocyanate bzw. die Ketoximanteile dargestellt.

Der NCO-Gehalt der (blockierten) NCO-Präpolymeren beträgt im allgemeinen zwischen 2 bis 7 Gew.-%, bevorzugt zwischen 3 und 4,5 Gew.-%.

Die Vermischung der erfindungsgemässen NCO-Präpolymeren [A)] mit den Polyaminvernetzern [B)] erfolgt im allgemeinen bei Raumtemperatur oder wenig erhöhter Temperatur etwa im Verhältnis der Reaktiväquivalente der Komponenten, so dass das Äquivalentverhältnis von (blockiertem) NCO zu $NH_2$ erfindungsgemäss im allgemeinen zwischen 1,2:1 und 0,8, bevorzugt 1,05:1,0 und 0,95:1, besonders bevorzugt jedoch um 1:1 liegt.

Zur Herstellung von gebrauchsfertigen Beschichtungsmassen können den erfindungsgemässen Reaktivgemischen an sich bekannte Zuschläge wie z.B. Pigmente, Verlaufmittel wie Silikone, UV-Stabilisatoren, Lichtschutzmittel, Antioxidantien, Füllstoffe und/oder Treibmittel beigemischt werden.

Die erfindungsgemässen Reaktivgemische reagieren in Form der aufgestrichenen Beschichtungsmassen unter Verdampfen des Lösungsmittels zu Polyurethanharnstoffen, bei welchen die NCO-Präpolymeren [A)] über Harnstoffgruppen mit den Resten der Polyamine [B)] verknüpft sind, z.B. bei zweiwertigen Komponenten

$$n.\ OCN\text{-}A'\text{-}NCO + n\ H_2N\text{-}D\text{-}NH_2$$

$$\rightarrow$$

$$\left[NH\cdot CO\cdot NH\text{-}A'\text{-}NH\cdot CO\cdot NH\text{-}D\right]_n$$

wobei

n die Zahl der zu verknüpfenden Komponenten ist,

A' Rest des NCO-Präpolymers ohne seine NCO-Endgruppen ist,

mit der Massgabe, dass der Rest A' mindestens 50 Mol-% der höhermolekularen Polyhydroxylverbindungen in Form von Hexandiol-1,6/ε-Caprolacton-Polycarbonaten des Molgewichts 1000 bis 4000 und mindestens 0,1 bis 0,8 Mol pro Mol höhermolekularer Polyole an Biscarbazinester-Diolen der Formel

$$HO\text{-}R\text{-}O\cdot\overset{\overset{\displaystyle O}{\|}}{C}\cdot NH\cdot NH\cdot\overset{\overset{\displaystyle O}{\|}}{C}\cdot O\text{-}R\text{-}OH$$

wobei

R die o.g. Bedeutung besitzt, enthält.

Das Polymere ist über aliphatische und/oder cycloaliphatische Diamine $H_2N\text{-}D\text{-}NH_2$ (als Kettenverlängerungsmittel oder «Vernetzer») verknüpft, wobei D einen zweiwertigen aliphatischen und/oder cycloaliphatischen Rest, vorzugsweise einen gegebenenfalls $C_1$-$C_4$-alkylsubstituierten 4,4'-Dicyclohexylmethanrest darstellt.

Die erfindungsgemässen lösungsmittelarmen, hitzehärtbaren Reaktivbeschichtungsmassen können zur Herstellung von Beschichtungen auf den in der Praxis üblichen Beschichtungsanlagen sowohl nach dem Direkt- als auch nach dem Umkehrbeschichtungsverfahren verwendet werden. Ausserdem können damit auf speziell vorbereiteten Umkehrbeschichtungsanlagen mit z.B. entsprechenden Silikonmatrizen und einer geeigneten Temperaturführung veloursartige Beschichtungen hergestellt werden.

Zur Herstellung einer Umkehrbeschichtung nach dem erfindungsgemässen Verfahren trägt man beispielsweise zuerst auf einem geeigneten Zwischenträger, z.B. einem Trennpapier oder einer Silikongummimatrize mit dem Abdruck bestimmter Lederoberflächen, das Reaktivgemisch für den Deckstrich in einer Menge von ca. 30 bis 100 g pro $m^2$ auf, härtet im Trockenkanal bei etwa 150 bis 180°C aus, bringt auf die trockene Deckschicht einen geeigneten Haftstrich, z.B. der in DE-OS 2 902 090 beschriebenen Art, auf, kaschiert das Substrat hinzu, härtet die Beschichtung in einem weiteren Trockenkanal bei den erforderlichen Temperaturen aus und zieht das beschichtete Substrat vom Trennträger ab.

Wie schon erwähnt, können die erfindungsgemässen Reaktivbeschichtungsmischungen aber auch im Direktstreichverfahren unmittelbar auf das textile Substrat aufgebracht werden. Mit Auftragsmengen von etwa 50 bis 200 g/$m^2$ können auf diese Weise, je nach Anwendungszweck als z.B. Sportbekleidung oder Planenbeschichtung oder zur Herstellung von Förderbändern, Schwimmwesten usw., unterschiedlich dicke Beschichtungen hergestellt werden. Die Ausheiztemperaturen liegen im allgemeinen oberhalb 120°C, bevorzugt bei etwa 150 bis 180°C, da blockierte, aliphatische NCO-Gruppen thermisch stabiler bzw. weniger reaktiv sind als aromatische und erst bei relativ höherer Temperatur zurückspalten, bzw. mit den aliphatischen bzw. cycloaliphatischen Polyaminen unter Polyurethanharnstoffbildung reagieren.

Obwohl die erfindungsgemässen Reaktivbeschichtungsmassen somit höhere Temperaturen und/oder längere Verweilzeiten im Trockenkanal zur Aushärtung benötigen als z.B. die aromatische blockierte NCO-Gruppen enthaltenden Beschichtungsmassen entsprechend DE-OS 2 902 090 ist es überraschend, dass keine Aminolyse der Ester- oder Carbonat-Gruppen zu beobachten ist. Auch die ansonsten merklich erkennbare Wärmevergilbung der Beschichtungen nach dem Stand der Technik ist in der erfindungsgemässen Beschichtungsmasse deutlich verbessert.

Die erhaltenen Beschichtungen sind trocken im Griff und gleichen in ihrem guten mechanischen Eigenschaftsniveau den aus Einkomponenten-Polyurethanlösungen hergestellten Beschichtungen. Daneben besitzen sie nach Alterung eine sehr gute Lichtechtheit (geringe Verfärbung), Licht- und Hydrolysebeständigkeit und gute Sauerstoff- und Oxidationsbeständigkeit. Aufgrund der bei den erfindungsgemässen Beschichtungen mengenmässig als Hauptkomponenten zum Einsatz kommenden speziellen Caprolacton/Hexandiol-1,6-polyester-polycarbonate, weisen sie einen angenehmen und weichen Griff auf. Anwendungsgebiete dieser Beschichtungen liegen daher hauptsächlich im Oberbekleidungs-, Schuh- und Polstersektor. Ein weiterer Vorteil der erfindungsgemäss eingesetzten Polyesterpolycarbonate liegt darin, dass man zur Herstellung der verarbeitungsfähigen Beschichtungsmassen relativ wenig Lösungsmittel benötigt. Würde man beispielsweise die Beschichtungsmassen mit reinen Hexandiol-Polycarbonaten, wie sie in der bereits zitierten DE-OS 2 252 280 verwendet werden, aufbauen, so benötigte man einen erheblich höheren Lösungsmittelanteil, um derart hochkristalline Produkte in Lösung zu halten. Andererseits führt die ausschliessliche Verwendung von Polyestern für die lichtbeständigen Deckschicht-Beschichtungsmassen zu Nachteilen, wie sie in dem nachfolgenden Vergleichsbeispiel erläutert sind. Abgesehen von dem schlechten Hydrolyse-Alterungs-Verhalten sind diese Beschichtungen nach der Aushärtung im Trockenkanal wesentlich blockender im Griff, ausserdem zeigen sie eine zu starke Dehnungskristallisation bereits bei Raumtemperatur oder nur geringfügig unter der Raumtemperatur liegenden Temperaturen. Die nachfolgenden Beispiele erläutern die Erfindung.

*Beispiel 1*

Dieses Beispiel beschreibt die Herstellung einer erfindungsgemässen Beschichtungsmasse mit eingebautem Bis-carbazinester-diol, deren Aushärtung zu einem Film auf einer üblichen Beschichtungsanlage und die Eigenschaften dieses Filmes.

*A. Herstellung des Bis-carbazinester-diols*

50 Gew.-Teile Hydrazinhydrat und etwa 100 Gew.-Teile Toluol werden vorgelegt, die sich bildenden 2 Phasen gut gerührt. Bei Raumtemperatur gibt man hierzu portionsweise 204 Gew.-Teile Propylenglykolcarbonat (2-Oxo-4-methyl-1,3-dioxolan), worauf ein leichter Temperaturanstieg bis etwa 60°C zu beobachten ist. Nach beendeter Zugabe wird 1 Stunde bei 100°C gerührt, danach werden bei dieser Temperatur Toluol und Hydratwasser bei 15 bis 18 mbar abdestilliert. Es verbleiben 236 Gew.-Teile eines klaren, farblosen Öls des Bis-carbazinesterdiols, das nach Destillation (110°C/0,04 mbar) eine ermittelte Molmasse von 236 besitzt.

Formel:

$CH_3$ $CH_3$
| |
$HO\text{-}CH\text{-}CH_2\text{-}O\text{-}CO\text{-}NH\text{-}NH\text{-}CO\text{-}O\text{-}CH_2\text{-}CH\text{-}OH$

(und geringe Anteile der Isomeren mit primären OH-Gruppen).

*B. Herstellung des blockierten NCO-Vorpolymerisats*

1000 Gew.-Teile eines Hydroxylpolyester-Polycarbonats (OH-Zahl 56), hergestellt aus dem Esterglykol von $\epsilon$-Caprolacton und Hexandiol-1,6 (1:1) mit Diphenylcarbonat gemäss der DAS 1 770 245, werden zusammen mit 298 Gew.-Teilen 4,4'-Diisocyanato-dicyclohexylmethan etwa 2 Stunden bei 115°C umgesetzt, bis der ermittelte NCO-Gehalt bei 4,1% liegt. Danach wird die Lösung aus 23,6 g (0,1 Mol) Gew.-Teilen des in Stufe A beschriebenen Biscarbazinester-diols in 355 Gew.-Teilen Ethylenglykolmonomethylether-acetat hinzugegeben und bis zu einem NCO-Gehalt der NCO-Vorpolymerisatlösung von 2,7% umgesetzt. Anschliessend kühlt man auf etwa 70°C ab, fügt 94 Gew.-Teile Butanonoxim hinzu und überprüft nach etwa 10- bis 20minütiger Nachrührzeit die NCO-Blockierungsreaktion anhand des IR-Spektrums. Das Oxim-blockierte NCO-Vorpolymerisat (80% Feststoff) stellt eine farblose, klare Flüssigkeit mit einer Viskosität von 35 000 mPas bei 20°C dar und hat einen bestimmbaren, latenten NCO-Gehalt von 2,5% und somit ein NCO-Äquivalentgewicht von 1680.

*C. Herstellung der Beschichtungsmasse und des Filmes sowie Filmeigenschaften*

1680 Gew.-Teile des unter B beschriebenen Vorpolymerisats werden mit 119 Gew.-Teilen, d.h. einer äquivalenten Menge 4,4'-Diamino-3,3'-dimethyl-dicyclohexylmethan gemischt. Weiterhin werden 10 Gew.-% einer handelsüblichen Pigmentanreibung,

0,5 Gew.-% eines Siliconöls und 2 Gew.-% eines Silikat-Füllstoffes in die Mischung eingearbeitet. Die anwendungsfertige Beschichtungsmasse hat eine Viskosität von ca. 30 000 mPas bei Raumtemperatur und bleibt einige Wochen bei dieser Temperatur unverändert.

Auf einer üblichen Beschichtungsmaschine mit Walzenrakel wird die Beschichtungsmasse in einer Menge von 90 g/m² auf ein Trennpapier gestrichen und in einem Trockenkanal bei 100 bis 170°C während 5 Minuten ausgehärtet.

Man erhält einen weichen, im Griff trockenen Film, der seine Zugfestigkeit auch noch nach 6wöchiger Hydrolysealterung (70°C, 95% relative Luftfeuchtigkeit) praktisch unverändert beibehält. Die Zugfestigkeit und Dehnung am Original, sowie am gealterten und belichteten Film werden nach DIN 53 504 bestimmt.

Folgende Werte wurden ermittelt:

| | Zugfestigkeit/Dehnung |
|---|---|
| a) Original | 30 MPa/450% |
| b) nach 14tägiger Hydrolyse (70°C; 95% rel. Luftfeuchtigkeit) | 30 MPa/430% |
| c) nach 42tägiger Hydrolyse (70°C; 95% rel. Luftfeuchtigkeit) | 27 MPa/430% |
| d) nach 400stündigem Xeno-Test | 30 MPa/440% |
| Modul 100% | 5 MPa |

*Beispiel 2* (Vergleichsbeispiel 1)

Dieses Vergleichsbeispiel ist so konzipiert, dass sämtliche Schritte des Beispiels 1 mit einer einzigen Ausnahme durchgeführt werden:

Anstelle des erfindungsgemäss verwendeten flüssigen Polyester-Polycarbonats wird ein handelsüblicher Hydroxylpolyester aus Adipinsäure und Ethylenglykol mit einer OH-Zahl von 56 eingesetzt. Die Herstellungsbedingungen dieses blockierten NCO-Vorpolymerisats sowie die Mischungsverhältnisse für die Beschichtungsmasse entsprechen vollkommen den in Beispiel 1 B/C angegebenen.

Nach den gleichen Aushärtungsbedingungen wie in Beispiel 1 C erhält man einen sehr blockenden, «mürben» Film, bedingt durch die bei der Vernetzung eintretende Aminolyse des Polyesterbausteins. Bereits nach 14tägiger Hydrolysealterung ist die Zugfestigkeit auf weniger als die Hälfte des Ausgangswertes abgesunken:

| | Zugfestigkeit/Dehnung |
|---|---|
| a) Original | 18 MPa/350% |
| b) nach 14tägiger Hydrolyse (70°C; 95% rel. Luftfeuchtigkeit) | 8 MPa/300% |

*Beispiel 3* (Vergleichsbeispiel 2)

Dieses Vergleichsbeispiel beschreibt die Herstellung einer Beschichtungsmasse, die im Unterschied zu der erfindungsgemässen des Beispiels 1 kein Biscarbazinester-diol enthält.

Die Filmeigenschaften, insbesondere nach dem 400-Stunden-Xeno-Test, werden angegeben.

*A. Herstellung des blockierten NCO-Vorpolymerisats*

1000 Gew.-Teile des bereits im Beispiel 1 eingesetzten Hydroxylpolyester-Polycarbonats der OH-Zahl 56, hergestellt aus dem Esterglykol von ε-Caprolacton und Hexandiol-1,6 mit Diphenylcarbonat gemäss der DAS 1 770 245, werden mit 262 Gew.-Teilen 4,4'-Diisocyanato-dicyclohexylmethan etwa 2 Stunden bei 115°C umgesetzt, bis der ermittelte NCO-Gehalt bei ca. 2,9% (berechnet sind 3,3%) liegt. Unter Zugabe von 338 Gew.-Teilen Ethylenglykolmonomethyletheracetat wird das NCO-Vorpolymerisat auf 70 bis 80°C abgekühlt. Bei dieser Temperatur werden rasch 87 Gew.-Teile Butanonoxim hinzugefügt. Nach Abklingen der leicht exothermen Reaktion, etwa 10 bis 20 Minuten nach der Oxim-Zugabe, ist IR-spektroskopisch kein NCO mehr nachweisbar. Das blockierte NCO-Vorpolymerisat, 80%ig gelöst, stellt eine farblose, klare Flüssigkeit mit einer Viskosität von 40 000 mPas bei 20°C dar und hat einen bestimmbaren, latenten NCO-Gehalt von 2,4% und somit ein NCO-Äquivalentgewicht von 1750.

*B. Herstellung der Beschichtungsmasse und des Filmes sowie Filmeigenschaften*

1750 Gew.-Teile des unter A beschriebenen Vorpolymerisats werden mit 119 Gew.-Teilen, d.h. einer äquivalenten Menge 4,4'-Diamino-3,3'-dimethyl-dicyclohexylmethan gemischt. Weiterhin werden 10 Gew.-% einer handelsüblichen Pigmentanreibung, 0,5 Gew.-% eines Siliconöls und 2 Gew.-% eines Silikat-Füllstoffes in die Mischung eingearbeitet. Die anwendungsfertige Beschichtungsmasse hat eine Viskosität von ca. 40 000 mPas bei 20°C und bleibt einige Wochen bei dieser Temperatur unverändert.

Auf einer üblichen Beschichtungsmaschine mit Walzenrakel wird die Beschichtungsmasse in einer Menge von 90 g/m² auf ein Trennpapier gestrichen und in einem Trockenkanal bei 160 bis 170°C während etwa 5 Minuten ausgehärtet.

Man erhält einen nicht-blockenden, elastischen Film, der nach 400stündiger Xeno-Test-Belichtung eine deutlich verminderte Zugfestigkeit und Dehnung aufweist:

| | Zugfestigkeit/Dehnung |
|---|---|
| a) Original | 28 MPa/500% |
| b) nach 42tägiger Hydrolyse (70°C; 95% rel. Luftfeuchtigkeit) | 25 MPa/450% |
| c) nach 400stündigem Xeno-Test | 17 MPa/200% |
| Modul 100% | 4 MPa |

*Beispiel 4*

Dieses Beispiel beschreibt die Herstellung einer erfindungsgemässen Beschichtungmasse mit eingebautem Bis-carbazinester-diol, die Eigenschaften des hieraus resultierenden Filmes, die Methode der Umkehrbeschichtung, die Herstellung eines Veloursimitats sowie die jeweiligen Beschichtungseigenschaften.

*A. Herstellung des blockierten NCO-Vorpolymerisats*

1000 Gew.-Teile des bereits in Beispiel 1 verwendeten Hydroxylpolyester-Polycarbonats mit der OH-Zahl 56 und 500 Gew.-Teile eines Hydroxylpolyesters aus Adipinsäure, Hexandiol-1,6 und Neopentylglykol (Diol-Molverhältnis 65:35), mit der OH-Zahl

56 werden zusammen mit 296 Gew.-Teilen 4,4'-Diisocyanato-dicyclohexylmethan und 261 Gew.-Teilen Hexamethylendiisocyanat etwa 2 Stunden bei 115°C umgesetzt, bis der ermittelte NCO-Gehalt bei ca. 7,6% (berechnet sind 7,8%) liegt. Man kühlt auf 80°C ab und gibt die Lösung aus 600 Gew.-Teilen Ethylenglykolmonomethylether-acetat, 50 Gew.-Teilen Triethanolamin und 71,5 (0,304 Mol) Gew.-Teilen des gemäss Beispiel 1 hergestellten Biscarbazinester-diols hinzu. Danach wird weitere 2,5 Stunden bei 80°C umgesetzt, bis der NCO-Gehalt auf etwa 2,80% (berechnet sind 2,88%) abgefallen ist. Man rührt jetzt 183 Gew.-Teile Butanonoxim ein und kann nach kurzer Umsetzungszeit IR-spektroskopisch kein NCO mehr nachweisen. Das blockierte NCO-Vorpolymerisat, 80%ig gelöst, stellt eine klare, schwach gelb gefärbte Flüssigkeit mit einer Viskosität von 45 000 mPas bei 20°C dar und hat ein NCO-Äquivalent von 1410 g.

Der Gehalt des blockierten NCO-Vorpolymerisats, ohne Einbeziehung des Lösungsmittelgehalts, an Makropolyolen beträgt 63,6 Gew.-%, derjenige an niedermolekularen Polyolen 5,1 Gew.-%. Der Gehalt des blockierten NCO-Vorpolymerisats, ohne Einbeziehung des Gehalts an Lösungsmittel, an dem Polyester-Polycarbonat beträgt 42,4 Gew.-%, derjenige an dem Bis-carbazinesterdiol 3,0 Gew.-%.

*B. Herstellung der Deckstrich-Beschichtungsmasse, eines Filmes daraus, sowie Filmwerte*

1410 Gew.-Teile des in Abschnitt A beschriebenen Vorpolymerisats werden mit 119 Gew.-Teilen, d.h. einer äquivalenten Menge, 4,4'-Diamino-3,3'-dimethyldicyclohexylmethan gemischt. Dieses Reaktionsgemisch ist mehrere Wochen ohne Viskositätsanstieg bei Raumtemperatur lagerfähig. Weiterhin werden in diese Deckstrichpaste 10 Gew.-% einer handelsüblichen Pigmentanreibung, 0,5 Gew.-% Siliconöl und 2 Gew.-% eines Silikat-Füllstoffes eingearbeitet. Die Viskosität der anwendungsfertigen Paste liegt bei ca. 50 000 mPas.

Diese Deckstrichpaste wird in einer Menge von 90 g/m², wie in Beispiel 1 C beschrieben, zu einem Film, der die folgenden Eigenschaften besitzt, verarbeitet:

Zugfestigkeit/Dehnung

| | | |
|---|---|---|
| a) | Original | 30 MPa/450% |
| b) | nach 14tägiger Hydrolyse (70°C; 95% rel. Luftfeuchtigkeit) | 30 MPa/430% |
| c) | nach 42tägiger Hydrolyse | 27 MPa/430% |
| d) | nach 400stündigem Xeno-Test | 30 MPa/440% |
| | Modul 100% | 7 MPa |
| | Lichtechtheit (Blauskala) | 7 |
| | Erweichungsbereich | >220°C |
| | Quellung in Perchlorethylen | < 80% |

*C. Herstellung einer Transferbeschichtung*

Auf einer Beschichtungsanlage mit 2 Streichwerken wird mittels eines Walzenrakels die obige Deckstrichpaste in einer Auftragsmenge von 80 g/m² auf ein Trennpapier gestrichen und in einem Trockenkanal bei 160 bis 170°C während etwa 3 bis 5 Minuten ausgehärtet. An dem zweiten Streichwerk wird in analoger Weise ein Haftstrich appliziert. Der Haftstrich kann dabei aus bekannten Lösungs-PUR-Produkten entstehen. Üblicherweise ist er jedoch ein ebenfalls lösungsmittelarmes, Polyether sowie aromatische Isocyanate enthaltendes Reaktivsystem, wie es in der EP-A 4597 und der DE-OS 2 902 090 beschrieben wird.

Der Lösungshaftstrich ist hierbei wie folgt zusammengesetzt: Ein Einkomponenten-Polyurethan ist 35%ig in einer Mischung aus DMF/Methylethylketon/Toluol (1:1:1) gelöst. Die Viskosität dieser Lösung beträgt 35 000 mPas bei 25°C. Das Polyurethan wird durch Umsetzen von 1100 g eines Butandioladipats der OH-Zahl 56 mit 103 g Butandiol-1,4 und 412 g 4,4'-Diisocyanatodiphenylmethan erhalten.

Der lösungsmittelarme Haftstrich ist wie folgt zusammengesetzt: In 1000 g eines blockierten NCO-Vorpolymerisats werden 250 g einer 40%igen Polyacrylatdispersion aus Acrylsäurebutylester, Styrol und N-Methylolacrylamid und 68,5 g 4,4'-Diamino-3,3'-dimethyl-dicyclohexylmethan als Vernetzer eingerührt. Das blockierte NCO-Vorpolymerisat wird wie folgt hergestellt: 1600 g eines auf Trimethylolpropan gestarteten Polyethers aus Propylenoxid und ca. 20% Ethylenoxid mit der OH-Zahl 28 und 200 g eines Polyethers aus Bisphenol A und Propylenoxid mit der OH-Zahl 200 werden nach dem Entwässern mit 200 g 4,4'-Diisocyanatodiphenylmethan und 140 g Toluylendiisocyanat bei 90°C bis zu einem NCO-Gehalt von 2,9% umgesetzt. Danach gibt man bei 60 bis 70°C 129 g Butanonoxim hinzu und kontrolliert IR-spektroskopisch den vollständigen Umsatz der NCO-Gruppen. Mit Hilfe von 44 g Isopropanol wird die Viskosität des blockierten NCO-Vorpolymerisats auf ca. 60 000 mPas bei 25°C eingestellt. Der Gehalt an blockierten NCO-Gruppen beträgt 2,7%.

Zu dem aufgerakelten Haftstrich, dem obigen Lösungshaftstrich oder dem lösungsmittelarmen Haftstrich, wird die Textilbahn, eine gerauhte Baumwollware, kaschiert. Die gesamte Beschichtung durchläuft anschliessend den 2. Trockenkanal, wo sie bei etwa 130 bis 160°C 2 bis 3 Minuten ausgehärtet wird.

Die Beschichtung weist einen trockenen und weichen Griff auf, was auch mit dem 100%-Modul-Wert des Deckstrichfilmes von 7,0 MPa korreliert. Die Knickechtheiten sind gut, die Hydrolysebeständigkeit ist sehr gut.

Knickechtheit im Bally-Flexometer bei 25°C

| | | | |
|---|---|---|---|
| a) | Original | 150 000 | Knickungen ohne Beschädigung |
| b) | nach 14tägiger Hydrolyse (70°C; 95% rel. Luftfeuchtigkeit) | 150 000 | » |
| c) | nach 400stündigem Xeno-Test | 150 000 | » |

Die Lichtbeständigkeit wird nach dem sogenannten Ford-Test EU-BN 1-1 ermittelt. Hierbei wird die Beschichtung einer Nassbelichtung (Belichtungszeit 120 Fadeometer-Standard-Stunden mit einer Kohlebogenlampe von 15-17 A/130-145 V) ausgesetzt.

Die Probe wird unter Nordhimmel-Tageslicht im Farbtonvergleichsgerät anhand des Graumassstabes oder der AATCC-Grey Scale auf Ausbleichen (Farbtiefe) und im Vergleich zum freigegebenen Standard-Muster auf Farbtonänderungen, Glanzänderungen oder Verfleckungen beurteilt.

Die Beschichtung besteht diesen Test ohne Verschlechterung. Es tritt ausserdem keine Versprödung, wie sie im Falle Polyether-haltiger Beschichtungen zu beobachten ist (siehe Beispiel 5), auf.

*D. Herstellung eines Velours-Imitats*

Die Beschichtungsmasse nach obigem Abschnitt B wird auf eine Matrize gemäss Beispiel 1 der deutschen Offenlegungsschrift 1 933 255 im Rakelverfahren mit einer Auflage von ca. 200 g/m$^3$ aufgetragen. Die beschichtete Matrize wird nunmehr mit einer Bandgeschwindigkeit von ca. 9 m pro Minute durch einen Heizkanal von 9 m Länge geführt, der auf eine Lufttemperatur von 80°C beheizt ist. Nach Durchlaufen dieses ersten Heizkanals wird die beschichtete Matrize in einen zweiten Kanal geführt, den sie bei gleicher Geschwindigkeit durchläuft. Dieser Heizkanal ist 18 m lang und wird auf einer Temperatur von 170°C gehalten. Nach dem Abkühlen wird die Beschichtung von der Matrize genommen und durch Unterkleben mit einem einseitig gerauhten Baumwollgewebe, wahlweise auch mit einem Mischgewebe aus Polyester-Baumwolle, mit einem Quadratmetergewicht von ca. 190 g verstärkt. Die Kaschierung erfolgt auf der glatten Seite der Beschichtung mittels eines handelsüblichen Polyurethan-Einkomponentensystems (siehe Lösungshaftstrich nach Abschnitt C).

Der Velourseffekt wird durch Aufbürsten der Oberfläche mit den in der Textilindustrie üblichen Bürst- und Putzmaschinen verstärkt. Mittels an sich bekannter Hilfs- und Ausrüstungsverfahren kann der Velours noch stabilisiert und in seinen Gebrauchseigenschaften verbessert werden. Es entsteht so ein textiles Flächengebilde mit velourslederartiger Oberfläche, das als Schuhmaterial oder auch für Bekleidungszwecke dienen kann.

Die aufgrund der feinen Härchen stark vergrösserte Oberfläche dieser PUR-Beschichtung kann einer Nassbelichtung, wie sie in Abschnitt C erwähnt wird, unterworfen werden, ohne dass die Härchen verspröden oder zusammenkleben. Ebenso ist keinerlei Verfärbung der Velours-Beschichtung festzustellen. Die Velourleder-Imitation auf der Lichtoxidations- und Hydrolyse-beständigen Basis gemäss der erfindungsgemässen Beschichtungsmasse stellt einen erheblichen Fortschritt gegenüber bisherigen Beschichtungsmassen dar, da die sehr feinen Velourshärchen üblicherweise durch einen schnellen Licht- und Oxidationsabbau zerstört werden.

*Beispiel 5* (Vergleichsbeispiel 3)

Dieses Vergleichsbeispiel beschreibt die Herstellung eines Polyether, Polyester und aromatischen Diisocyanate enthaltenden Beschichtungsfilmes sowie dessen Eigenschaftsverlust unter Lichteinwirkung.

*A. Herstellung des blockierten NCO-Vorpolymerisats*

Als Hydroxylkomponenten werden 2000 g eines Polyethers auf Basis von Trimethylolpropan und Propylenoxid (Molekulargewicht 6000), 1000 g eines linearen Polyethers auf Basis von Propylenglykol und Propylenoxid (Molekulargewicht 1000), 1450 g eines linearen Polyesters auf Basis von Hexandiol-1,6, Neopentylglykol und Adipinsäure (Molekulargewicht 1700), sowie 22,5 g Butandiol-1,4 mit 1125 g 4,4'-Diisocyanato-diphenylmethan und 174 g 2,4-Diisocyanato-toluol ca. 3 Stunden bei 80 bis 90°C umgesetzt, bis der berechnete NCO-Gehalt von 4,26% knapp unterschritten ist. Anschliessend werden bei 60 bis 70°C 496 g Butanonoxim sowie 696 g Methylglykolacetat rasch eingerührt. Nach 20 Minuten ist kein NCO mehr IR-spektroskopisch nachweisbar. Das blockierte NCO-Vorpolymerisat, eine farblose, klare Flüssigkeit mit einer Viskosität von ca. 40 000 mPas bei Raumtemperatur, hat einen bestimmbaren, latenten NCO-Gehalt von 3,3 Gew.-% und somit ein NCO-Äquivalent von 1280 g.

*B. Herstellung der Deckstrich-Beschichtungsmasse, eines Filmes daraus sowie Filmwerte*

1280 g des unter A beschriebenen Vorpolymerisats werden mit 118 g 4,4'-Diamino-3,3'-dimethyldicyclohexylmethan, d.h. äquivalenten Mengen, vermischt. Weiterhin werden 10 Gew.-% einer handelsüblichen Pigmentpaste, 0,5 Gew.-% Siliconöl und 1,5 Gew.-% eines Silikat-Füllstoffes eingearbeitet. Die Viskosität der anwendungsfertigen Streichpaste beträgt ca. 60 000 mPas bei 25°C.

Auf einer üblichen Beschichtungsmaschine mit Walzenrakel wird die Beschichtungsmasse in einer Menge von 90 g/m$^2$ auf ein Trennpapier gestrichen und im Trockenkanal bei 140 bis 160°C während 2 Minuten ausgehärtet.

Man erhält einen nicht-blockenden, elastischen Film, der nach 400stündigem Xeno-Test deutlich Vergilbung zeigt und dessen Zugfestigkeit und Dehnung erheblich vermindert ist.

| | Zugfestigkeit/Dehnung |
|---|---|
| a) Original | 25 MPa/400% |
| b) nach 14tägiger Hydrolyse (70°C; 95% rel. Luftfeuchtigkeit) | 25 MPa/420% |
| c) nach 400stündigem Xeno-Test | 10 MPa/150% |
| Lichtechtheit | 3 |
| Modul 100% | 6 MPa |
| Erweichungsbereich | >220% |
| Quellung in Perchlorethylen | 100% |

*Beispiel 6*

*Herstellung des Bis-carbazin-bis-β-hydroxyethylesters*

50 Gew.-Teile Hydrazinhydrat und 90 Teile Toluol werden vorgelegt und unter gutem Rühren mit 76 Gew.-Teilen Ethylencarbonat (2-Oxo-1,3-dioxolan) portionsweise versetzt und 1 Stunde bei 80 bis 100°C gerührt.

Nach Einengen der Lösung und Kristallisation wird das Carbazinester-diol $HO \cdot CH_2 \cdot CH_2 \cdot O \cdot CO \cdot NH-NH-CO \cdot O \cdot CH_2 \cdot CH_2 \cdot OH$ mit einem Schmelzpunkt von 146°C (farblose Kristalle) erhalten.

Dieses Carbazinesterdiol ergibt bei Einbau anstelle des Carbazinesterdiols aus Beispiel 1 A bei gleicher

Molmenge gleichartige Ergebnisse (besonders verbesserte Vergilbungsbeständigkeit) wie in Beispiel 1 C oder Beispiel 4.

**Patentansprüche**

1. Verfahren zur Herstellung von lösungsmittelarmen, hitzehärtbaren Polyurethan-Reaktivbeschichtungsmassen auf Basis von einem Ketoxim-blockierten NCO-Präpolymeren A) aus höhermolekularen Polyolen, gegebenenfalls niedermolekularen Kettenverlängerungsmitteln und überschüssigen Polyisocyanaten, einem Polyaminvernetzer B), sowie gegebenenfalls Lösungsmitteln C), die sich zu lichtechten und licht-, oxidations-, thermo- und hydrolysebeständigen Polyurethanharnstoffen härten lassen, dadurch gekennzeichnet, dass man die Komponenten in folgenden Molverhältnissen einsetzt:

A) ein mit Ketoximen blockiertes NCO-Präpolymer aus

1. 1 Mol 2- bis 4funktionellen höhermolekularen Polyhydroxylverbindungen mit einem Molekulargewicht von 1000 und 4000, wobei
   a) 0,5 bis 1,0 Mol aus einem Polyestercarbonat mit einem Molekulargewicht von 1000 und 4000, hergestellt aus Diphenylcarbonat und Esterglykolen aus ε-Caprolacton und 1,6-Hexandiol, und
   b) 0,5 bis 0 Mol aus 2- bis 4-funktionellen, höhermolekularen Polyester-Polyolen und einem Molekulargewicht von 1000 bis 4000, bestehen, ferner
2. 0,1 bis 1,2 Mol niedermolekularen Polyolen mit Molekulargewichten von 62 bis 300, wobei diese
   c) 0,1 bis 0,8 Mol Biscarbazinester-polyole der allgemeinen Formel

$$HO\text{-}R\text{-}O\cdot\overset{O}{\overset{\|}{C}}\cdot NH\cdot NH\cdot\overset{O}{\overset{\|}{C}}\cdot O\text{-}R\text{-}OH \quad ,$$

   in der R einen geradkettigen und/oder verzweigten $C_1$-$C_5$-Alkylen- oder Hydroxyl-substituierten Alkylenrest darstellt, und gegebenenfalls
   d) bis zu 1,1 Mol niedermolekulare Polyole, sind, sowie
3. aliphatischen und/oder cycloaliphatischen Diisocynaten in einem NCO/OH-Verhältnis der Komponenten $\frac{3}{1+2}$ von 1,5:1 bis 6:1 und
4. dem NCO-Gehalt etwa äquivalenten Mengen an Ketoximen,

B) als Vernetzer

aliphatische und/oder cycloaliphatische Polyamine mit mindestens 2 primären Aminogruppen, in $NCO/NH_2$-Verhältnissen von A)/B) zwischen 1,2:1 und 0,8:1, sowie

C) organische Lösungsmittel, in solchen Mengen, dass Reaktionslösungen mit bis zu 40 Gew.-% Lösungsmittelgehalt erhalten werden.

2. Verfahren nach Anspruch 1, dadurch gekennzeichnet, dass man als Komponente A)
ein Ketoxim-blockiertes NCO-Präpolymer aus 1 Mol 2- bis 3funktionellen Polyhydroxylverbindungen mit einem mittleren Molekulargewicht zwischen 1500 und 2500 verwendet, wobei

a) 0,5 bis 1,0 Mol aus dem linearen Polyester-Polycarbonat mit einem Molekulargewicht von 1500 bis 2500, und

b) aus 0,5 bis 0 Mol 2- bis 3funktionellen Polyesterpolyolen des Molekulargewichts 1500 bis 2500, welche auf der Basis von Diolen mit 4 und/oder mehr C-Atomen aufgebaut sind, bestehen.

3. Verfahren nach Ansprüchen 1 und 2, dadurch gekennzeichnet, dass man als niedermolekulare Polyolkomkonente [A)/2.c)] 0,1 bis 0,8 Mol an Biscarbazinester-diolen der Formel

$$HO\text{-}R\text{-}O\cdot\overset{O}{\overset{\|}{C}}\cdot NH\cdot NH\cdot\overset{O}{\overset{\|}{C}}\cdot O\text{-}R\text{-}OH \quad ,$$

in der R einen geradkettigen und/oder verzweigten $C_1$-$C_5$-Alkylrest darstellt, verwendet.

4. Verfahren nach Ansprüchen 1 bis 3, dadurch gekennzeichnet, dass in den Biscarbazinester-diolen der Rest R einen -Ethylen- und/oder einen -1,2-Propylen-Rest darstellt.

5. Verfahren nach Ansprüchen 1 bis 4, dadurch gekennzeichnet, dass als gegebenenfalls mitzuverwendende niedermolekulare Polyole [A)/2.d)] tertiäre Aminogruppen enthaltende aliphatische Di- und Triole verwendet werden.

6. Verfahren nach Ansprüchen 1 bis 5, dadurch gekennzeichnet, dass die NCO-Präpolymeren A) unter Verwendung von cycloaliphatischen Diisocyanaten [A)/3.] in NCO/OH-Molverhältnissen der Komponenten $\frac{3}{1+2}$ von 1,7:1 bis 2,5:1 hergestellt werden.

7. Verfahren nach Ansprüchen 1 bis 6, dadurch gekennzeichnet, dass als Polyamine B) aliphatische und/oder cycloaliphatische primäre Diamine in einem NCO/NH-Verhältnis von 1,05:1 bis 0,95:1 verwendet werden.

8. Verfahren nach Ansprüchen 1 bis 7, dadurch gekennzeichnet, dass man als überwiegendes Diamin ein cycloaliphatisches Diamin der Formel

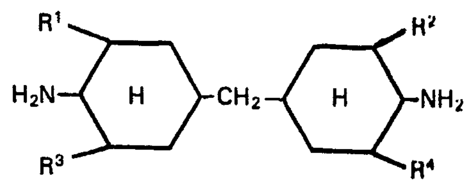

in welcher
$R^1$, $R^2$, $R^3$ und $R^4$ unabhängig voneinander für Wasserstoff oder eine $C_1$-$C_3$-Alkylgruppe stehen, mit der Massgabe, dass das Diamin zu mindestens 75% aus dem cis, cis-Isomeren besteht, wenn $R^1$ bis $R^4$ alle Wasserstoff bedeuten,
verwendet.

9. Verfahren zur Herstellung von Mischungen von

Reaktivbeschichtungsmassen, dadurch gekennzeichnet, dass nach Ansprüchen 1 bis 8 die NCO-Präpolymeren A) und die Polyamine B) in $NCO/NH_2$-Verhältnissen zwischen 1,2:1 und 0,8:1 unter Mitverwendung von organischen Lösungsmitteln C) in Mengen bis zu 40 Gew.-% innerhalb der Gesamtlösung vermischt werden.

10. Verwendung der lösungsmittelarmen, hitzehärtbaren Polyurethanreaktivbeschichtungsmassen, hergestellt nach Ansprüchen 1 bis 9, in Direkt-, Umkehr- und/oder Matrizenumkehrverfahren unter Bildung von lichtechten, licht-, oxidations-, thermo- und hydrolysebeständigen Polyurethanharnstoffen.

**Claims**

1. Process for the production of thermosetting reactive polyurethane coating compositions which have a low content of solvent and are based on a ketoxime-blocked NCO prepolymer A) of relatively high molecular weight polyols, optionally low molecular weight chain-extending agents and excess polyisocyanates, a polyamine crosslinking agent B), and optionally solvents C), which can be hardened to form lightfast polyurethane ureas which are resistant to light, oxidation, heat and hydrolysis, characterised in that the components are used in the following molar ratios:

A) a ketoxime-blocked NCO-prepolymer of

1. 1 mol of 2- to 4-functional relatively high molecular weight polyhydroxyl compounds having a molecular weight between 1,000 and 4,000,
   a) 0.5 to 1.0 mol consisting of a polyester carbonate having a molecular weight of 1,000 and 4,000, produced from diphenyl carbonate and ester glycols of $\epsilon$-caprolactone and 1,6-hexanediol, and
   b) 0.5 to 0 mol consisting of 2- to 4-functional relatively high molecular weight polyester polyols and a molecular weight of 1,000 to 4,000, and in addition,
2. 0.1 to 1.2 mols of low molecular weight polyols having molecular weights of 62 to 300, these being
   c) 0.1 to 0.8 mol of bis-carbazinic ester polyols of the general formula

$$HO\text{-}R\text{-}O\cdot\overset{O}{\overset{\|}{C}}\cdot NH\cdot NH\cdot\overset{O}{\overset{\|}{C}}\cdot O\text{-}R\text{-}OH \quad ,$$

   in which R represents a straight-chain and/or branched $C_1$-$C_5$-alkylene or hydroxyl-substituted alkylene radical, and optionally
   d) up to 1.1 mols of low molecular weight polyols, and
3. aliphatic and/or cycloaliphatic diisocyanates in an NCO/OH ratio of the components $\frac{3}{1+2}$ of 1.5:1 to 6:1 and
4. quantities of ketoximes approximately equivalent to the NCO content,

B) as crosslinking agent
aliphatic and/or cycloaliphatic polyamines containing at least 2 primary amino groups, in $NCO/NH_2$ ratios of A)/B) of between 1.2:1 and 0.8:1, and

C) organic solvents, in such quantities that reaction solutions containing up to 40% by weight of solvent are obtained.

2. Process according to Claim 1, characterised in that a ketoxime-blocked NCO prepolymer of 1 mol of 2- to 3-functional polyhydroxyl compounds having an average molecular weight between 1,500 and 2,500, wherein

a) 0.5 to 1.0 mol consists of the linear polyester polycarbonate having a molecular weight of 1,500 to 2,500 and

b) consists of 0.5 to 0 mol of 2- to 3-functional polyester polyols of a molecular weight of 1,500 to 2,500, which are synthesised on the basis of diols containing 4 and/or more C atoms,

is used as component A).

3. Process according to Claims 1 and 2, characterised in that 0.1 to 0.8 mol of bis-carbazinic ester diols of the formula

$$HO\text{-}R\text{-}O\cdot\overset{O}{\overset{\|}{C}}\cdot NH\cdot NH\cdot\overset{O}{\overset{\|}{C}}\cdot O\text{-}R\text{-}OH \quad ,$$

in which R represents a straigt-chain and/or branched $C_1$-$C_5$-alkylene radical, is used as the low molecular weight polyol component [A)/2.c)].

4. Process according to Claims 1 to 3, characterised in that in the bis-carbazinic ester diols the radical R represents an ethylene and/or a 1,2-propylene radical.

5. Process according to Claims 1 to 4, characterised in that aliphatic di- and triols containing tertiary amino groups are used as the low molecular weight polyols [A)/2.d)] which are optionally also to be used.

6. Process according to Claims 1 to 5, characterised in that the NCO prepolymers A) are prepared using cycloaliphatic diisocyanates [A)/3.] in NCO/OH molar ratios of components $\frac{3}{1+2}$ of 1.7:1 to 2.5:1.

7. Process according to Claims 1 to 6, characterised in that aliphatic and/or cycloaliphatic primary diamines are used as the polyamines B) in an NCO/NH ratio of 1.05:1 to 0.95:1.

8. Process according to Claims 1 to 7, characterised in that a cycloaliphatic diamine of the formula

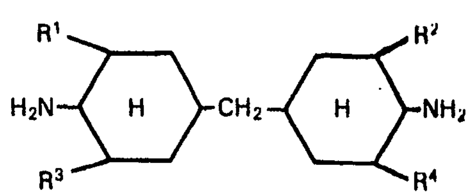

in which

$R^1$, $R^2$, $R^3$ and $R^4$ independently of one another represent hydrogen or a $C_1$-$C_3$-alkyl group, with the proviso that at least 75% of the diamine consists of the cis, cis-isomer, when $R^1$ to $R^4$ all denote hydrogen,
is used as the predominant diamine.

9. Process for the production of mixtures of reactive coating compositions, characterised in that according to Claims 1 to 8 the NCO prepolymers A) and the polyamines B) are mixed in $NCO/NH_2$ ratios between 1.2:1 and 0.8:1 using organic solvents C) in quantities of up to 40% by weight in the solution as a whole.

10. Use of the thermosetting reactive polyurethane coating compositions with a low content of solvent, produced according to Claims 1 to 9, in direct, reversal and/or matrix reversal processes to form light-fast polyurethane ureas which are resistant to light, oxidation, heat and hydrolysis.

**Revendications**

1. Procédé de préparation de compositions réactives d'enduction à base de polyuréthanne, thermodurcissables, pauvres en solvant, à base d'un prépolymère A), contenant des groupes NCO bloqués par une cétoxime, dérivant de polyols à poids moléculaire élevé, éventuellement d'agents à bas poids moléculaire d'allongement des chaînes et d'un excès de polyisocyanates, d'un agent B) de réticulation du type polyamine ainsi que, éventuellement, de solvant C), que l'on peut laisser durcir pour obtenir des polyuréthanne-urées solides à la lumière et résistant bien à la lumière, à l'oxydation, à la chaleur et à l'hydrolyse, procédé caractérisé en ce qu'on utilise les composants selon les proportions molaires suivantes:

A) un prépolymère à groupes NCO bloqués par une cétoxime, obtenu à partir de

1. 1 mole de composés polyhydroxylés à poids moléculaire élevé comportant 2 à 4 groupes fonctionnels et ayant un poids moléculaire compris entre 1000 et 4000,
   a) 0,5 à 1,0 mole provenant d'un polyester carbonate ayant un poids moléculaire de 1000 à 4000, préparé à partir de carbonate de diphényle et d'ester-glycols obtenus à partir de $\epsilon$-caprolactone et de l'hexanediol-1,6, et
   b) 0,5 à 0 mole provenant de polyester-polyols comportant 2 à 4 groupes fonctionnels, à poids moléculaire élevé, ayant un poids moléculaire de 1000 à 4000, et

2. 0,1 a 1,2 mole de polyols à bas poids moléculaire, ayant des poids moléculaires de 62 à 300, dont
   c) 0,1 à 0,8 mole sont des biscarbazinester-polyols de formule générale

$$HO\text{-}R\text{-}O\cdot\overset{\overset{\displaystyle O}{\|}}{C}\cdot NH\cdot NH\cdot\overset{\overset{\displaystyle O}{\|}}{C}\cdot O\text{-}R\text{-}OH \quad ,$$

   (dans laquelle R représente un radical alkylène en $C_1$ à $C_5$, linéaire et/ou ramifié, ou un radical alkylène à substituant hydroxyle), et éventuellement
   d) jusqu'à 1,1 mole étant constitués par des polyols à bas poids moléculaire, et

3. des diisocyanates aliphatiques et/ou cycloaliphatiques, selon un rapport NCO/OH des composants $\frac{3}{1+2}$ de 1,5:1 à 6:1, et

4. des quantités de cétoxime équivalent approximativement à la teneur en NCO,

B) comme agent de réticulation des polyamines aliphatique et/ou cycloaliphatique comportant au moins 2 groupes amino primaires, selon des rapports $NCO/NH_2$ de A)/B) compris entre 1,2:1 et 0,8:1, ainsi que

C) du solvant organique présent en des quantités permettant d'obtenir des solutions de réaction contenant jusqu'à un maximum de 40% en poids de solvant.

2. Procédé selon la revendication 1, caractérisé en ce qu'on utilise comme constituant A) un prépolymère comportant des groupes NCO bloqués par une cétoxime, préparé à partir de 1 mole de composés polyhydroxylés comportant 2 à 3 groupes fonctionnels et ayant un poids moléculaire moyen compris entre 1500 et 2500,

a) 0,5 à 1,0 mole étant constitué par le polyester-polycarbonate linéaire ayant un poids moléculaire de 1500 à 2500, et

b) 0,5 à 0 mole étant constitué de polyesterpolyols comportant 2 à 3 groupes fonctinnels, d'un poids moléculaire de 1500 à 2500, obtenus à base de diols comportant 4 et/ou un plus grand nombre d'atomes de carbone.

3. Procédé selon les revendications 1 et 2, caractérisé en ce qu'on utilise comme composants polyols à bas poids moléculaire [A)/2.c)] 0,1 à 0,8 mole de biscarbazinester-diols de formule

$$HO\text{-}R\text{-}O\cdot\overset{\overset{\displaystyle O}{\|}}{C}\cdot NH\cdot NH\cdot\overset{\overset{\displaystyle O}{\|}}{C}\cdot O\text{-}R\text{-}OH \quad ,$$

dans laquelle R représente un radical alkylène en $C_1$ à $C_5$, linéaire et/ou ramifié.

4. Procédé selon l'une quelconque des revendications 1 à 3, caractérisé en ce que, dans les biscarbazinester-diols, le radical R représente un radical éthylène et/ou 1,2-propylène.

5. Procédé selon l'une quelconque des revendications 1 à 4, caractérisé en ce qu'on utilise comme polyols à bas poids moléculaire [A)/2.d)], éventuellement utilisés aussi, des di- et triols aliphatiques contenant des groupes amino tertiaires.

6. Procédé selon l'une quelconque des revendications 1 à 5, caractérisé en ce qu'on prépare les prépolymères A) contenant des groupes NCO, en utilisant des diisocyanates cycloaliphatiques [A)/3.] selon des rapports molaires NCO/OH des constituants $\frac{3}{1+2}$ de 1,7:1 à 2,5:1.

7. Procédé selon l'une quelconque des revendications 1 à 6, caractérisé en ce qu'on utilise comme polyamines B) des diamines primaires aliphatiques et/ou cycloaliphatiques, selon un rapport NCO/NH de 1,05:1 à 0,95:1.

8. Procédé selon l'une quelconque des revendications 1 à 7, caractérisé en ce qu'on utilise comme diamine principale une diamine cycloaliphatique de formule

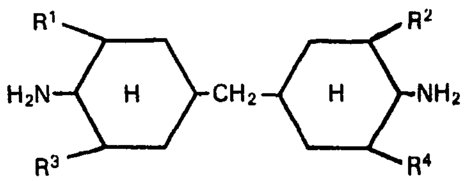

dans laquelle

$R^1$, $R^2$, $R^3$ et $R^4$ représentent, indépendamment l'un de l'autre, un atome d'hydrogène ou un groupe alkyle en $C_1$ à $C_3$, étant bien entendu que la diamine consiste pour 75% au moins en l'isomère, cis,cis quand $R^1$ à $R^4$ représentent tous des atomes d'hydrogène.

9. Procédé de préparation de mélanges de compositions réactives d'enduction, procédé caractérisé en ce qu'on mélange selon les revendications 1 à 8, les prépolymères A) contenant des groupes NCO et les polyamines B) selon les rapports $NCO/NH_2$ compris entre 1,2:1 et 0,8:1, en utilisant également des solvants organiques C) en des quantités allant jusqu'à 40% en poids à l'intérieur de la solution globale.

10. Utilisation des compositions réactives d'enduction à base de polyuréthannes thermodurcissables, pauvres en solvant, préparés selon les revendications 1 à 9, dans un procédé d'enduction directe, inverse et/ou inverse sur matrice, avec formation de polyuréthanne-urées solides à la lumière et résistant à la lumière, à l'oxydation, à la chaleur et à l'hydrolyse.